# EUROPÄISCHE PATENTANMELDUNG

(11) **EP 1 525 802 A1**
(43) Veröffentlichungstag der Anmeldung: **27.04.2005**
(21) Anmeldenummer: 04023559.0
(22) Anmeldetag: 04.10.2004
(51) Int. Cl.: A23B 7/152, A23L 3/3445, A23L 3/3427, B65D 5/48

(54) **Adsorption von Ethen zur Steuerung der Reifung von Früchten und Obst**

(30) Priorität: 22.10.2003 CH 18002003
(71) Anmelder: Perlen Converting AG, 6035 Perlen (CH)
(72) Erfinder: Frauchiger, Ulrich, 6006 Luzern (CH); Pfenninger, Armin, 8707 Uetikon (CH)
(74) Vertreter: Irniger, Ernst

(57) **Zusammenfassung**

Um insbesondere den Reifeprozess von Obst zu hemmen, wird die Verwendung eines Adsorbens wie insbesondere eines Zeoliths in der Umgebung des Obstes vorgeschlagen, welches in der Lage ist, Ethen zu adsorbieren. Vorzugsweise wird das Adsorbens in einer folienartigen oder einer papierartigen Anordnung in der Nähe des Obstes angeordnet und/oder mit dem Obst in Kontakt gebracht, um vom Obst abgegebenes Ethen ständig aus der Umgebungsathmosphäre zu adsorbieren (Fig. 1).

## Beschreibung

Die vorliegende Erfindung betrifft ein Verfahren zur Hemmung des Reifeprozesses von Obst, eine Anordnung zur Hemmung des Reifeprozesses sowie ein Verfahren zur Herstellung der Anordnung.

Die heutige Konsumgesellschaft ist sich gewohnt möglichst ganzjährig alle Arten von Genussmittel, bzw. Esswaren, wie insbesondere Frischprodukten wie Obst, Gemüse, etc., geniessen bzw. konsumieren zu können.

Speziell Obst, welches in unseren Breitengraden im Sommer und Herbst geerntet wird, muss entsprechend gelagert werden, damit auch im Winter bzw. Frühjahr das im Vorjahr geerntete Obst den richtigen Reifegrad bzw. die Essreife aufweist. Einerseits kann dies erreicht werden durch Ernten des Obstes bei noch nicht Erreichen der vollen Reife, jedoch wesentlich wichtiger ist die richtige Lagerung, bei welcher die Reifung möglichst gehemmt wird. Dabei wird einerseits eine Lageratmosphäre mit angereichertem Stickstoff/Kohlendioxidgehalt in der Luft gewählt, sowie erfolgt die Lagerung bei tiefen Temperaturen im Bereich von ca. 0 - 5°C.

Weiter erkannt wurde, dass Ethen ursächlich ist für die Fruchtreifung bzw. den Reifeprozess von Obst, indem in dessen Anwesenheit die Reifung und Schrumpfung stark beeinflusst wird. Entsprechend werden neuerdings Lagerhäuser mit Lüftungseinrichtungen versehen, um das vom Obst abgegebene Ethen ständig zu entfernen.

Wohl ist die erwähnte Lüftung in entsprechend eingerichteten Lagerhäusern möglich, schwierig aber beispielsweise beim Transport und bei Lagerung in Vorratskellern und dgl. Zudem sind alle oben geschilderten Massnahmen sehr energieintensiv und entsprechend teuer.

Weil das Ethen ursächlich mit der Fruchtreife verknüpft ist, müssen moderne Lager und Transportverfahren auf einen weitgehenden Ausschluss von Ethen aus der Lageratmosphäre und dabei eine Unterdrückung der Ethenwirkung abzielen. Damit kann die Fruchtreife verzögert und die Haltbarkeit der Früchte und des Obstes verlängert werden. Entsprechend wird die in der EP 1 134 022 vorgeschlagen, einen hydrophoben Zeolith als Adsorbens zu verwenden, um Ethen aus der Lageratmosphäre auszuschliessen bzw. um die Etheneinwirkung zu unterdrücken, um die Fruchtreife zu verzögern. Dabei wird vorgeschlagen, ein Adsorbens zu verwenden bestehend aus einem hydrophoben Zeolith und mindestens einem Bindemittel. Allerdings bleibt die EP 1 134 022 einen Vorschlag schuldig, in welcher Form der hydrophobe Zeolith eingesetzt werden kann, was letztlich wohl auch der Grund ist, weshalb hydrophobe Zeolithen bis heute für die Hemmung des Reifeprozesses keine Verwendung gefunden haben.

Es ist deshalb eine Aufgabe der vorliegenden Erfindung praktikable Massnahmen vorzuschlagen, um den Reifeprozess, insbesondere von Obst, wirksam zu hemmen bzw. zu verzögern.

Erfindungsgemäss wird die gestellte Aufgabe mittels eines Verfahrens gemäss dem Wortlaut nach Anspruch 1 bzw. mittels einer Anordnung gemäss dem Wortlaut nach Anspruch 3 gelöst.

Vorgeschlagen wird, dass zur Hemmung des Reifeprozesses, insbesondere von Obst, eine Anordnung, wie insbesondere eine Folie, ein Papierstreifen oder dgl. enthaltend Zeolith in der Umgebung des Obstes angeordnet wird, welche in der Lage ist, Ethen zu adsorbieren.

Bei der Anordnung kann es sich um eine Folie auf Basis eines Polymers, um eine Papierfolie, um einen Karton oder eine Schachtel oder ein boxenartiges Behältnis etc. handeln, welche befähigt ist Ethen bzw. Ethylen zu absorbieren, um den Reifeprozess bzw. die Schrumpfung von Obst zu verhindern.

Für die Ethenadsorption verantwortlich ist ein hydrophobes ethenaufnahmefähiges Molekularsieb bzw. Zeolith, bei welchem es sich um ein hoch poröses Aluminiumsilikat handelt wie beispielsweise in der EP 1 134 022 vorgeschlagen mit einem Netzwerk von genau definierten Poren. Dabei kann das Molekularsieb entweder in der Folie bzw. im Papier eingearbeitet sein, oder aber die Folie bzw. das Papier weist eine Beschichtung mit dem Ethenaufnahmefähigen Molekularsieb auf.

Für die Herstellung der erfindungsgemässen Anordnung bzw. für die Folie oder das Papier kann der Zeolith bzw. das Aluminiumsilikat mit definierten Poren in eine Polymerschmelze im Sinne eines Füllstoffes bzw. Additives beigemischt werden, worauf anschliessend die Folie extrudiert wird. Dabei muss darauf geachtet werden, dass die gebrauchsfertige Folie für Ethen durchlässig ist. Oder aber der Zeolith bzw. das Aluminiumsilikat wird bei der Herstellung von Papier dem wässrigen Papierbrei, wiederum im Sinne eines Additives, beigemischt, um anschliessend den Papierbrei gemäss üblicher Papierherstellungsverfahren weiter zu verarbeiten.

Es ist aber auch möglich, den hydrophoben Zeolithen im Sinne einer Beschichtung auf eine Polymerfolie oder auf Papier aufzutragen bzw. aufzuwalzen, aufzupressen, etc. Dies kann beispielsweise in Form einer wässrigen Dispersion erfolgen.

Als Bindemittel hierzu eignen sich beispielsweise Silane oder Siloxane, wodurch in diesem Falle das Verdunsten des Wassers vermieden werden kann, was tiefere Beschichtungstemperaturen erlaubt.

Die Beschichtung einer Polymerfolie kann ähnlich der Methode der Herstellung einer silikonisierten Folie erfolgen.

So lange das Spezialpapier oder die Folie, beinhaltend das Molekularsieb oder beschichtet mit dem Molekularsieb, in Kontakt oder in der Nähe von Obst angeordnet ist, kann Obst auch bei Raumtemperatur in guter Qualität gelagert werden. Die Folie bzw. das Papier kann beispielsweise zum Auslegen von Lagergestellen, Lagerschubladen, zum Auskleiden von Transportboxen, etc. verwendet werden. Für die Hemmung des weiteren Prozesses vorteilhaft ist es, wenn die erfindungsgemäss vorgeschlagene Anordnung bzw. Folien oder Papiere in der Nähe des zu lagernden Obstes bzw. des zu transportierenden Obstes angeordnet werden. Entsprechend kann es auch vorteilhaft sein, wenn auf einer Seite der Folie bzw. des Papiers bzw. der der Beschichtung entgegengesetzten Seite der Folie oder des Papiers ein Kleber aufgebracht ist, welcher vor Nichtgebrauch der Folie bzw. des Papiers mit einer silikonisierten Folie abgedeckt ist, damit der Kleber nicht austrocknet bis zum Einsatz. Beim Einsatz wird die silikonisierte Folie entfernt und die das Ethen-aufnahmefähige Molekularsieb enthaltende Folie bzw. das Papier kann beispielsweise an einer Wand, ähnlich einer Tapete, in einem Transportbehältnis, auf einem Lagergitter, etc. angeordnet werden, wobei durch den freigelegten Kleber die Folie bzw. das Papier verrutschsicher angeordnet werden kann. Durch Anordnen der erfindungsgemäss vorgeschlagenen Anordnung kann beträchtlich Kühlenergie eingespart werden, und gegebenenfalls auf den Einsatz von Inertgas verzichtet werden.

Wie bereits oben erwähnt, handelt es sich beim Zeolith um hochporöses kristallines Aluminiumsilikat mit einer hohen spezifischen Oberfläche. Das Verhältnis von SiO₂ zu Al₂O₃ kann von ca. 10 - 1000 variieren. Je grösser dieses Verhältnis ist, desto hydrophober ist die Oberfläche des Zeoliths. Die sich einstellenden Porensysteme mit Porenöffnungen können ein-, zwei- oder dreidimensional sein, mit Porenöffnungen von ca. 0,3 x 0,3 bis 0,8 x 0,8nm.

Für das bessere Verständnis der Erfindung ist nachfolgend unter Bezug auf die beigefügten Figuren je ein beispielsweise möglicher Schichtaufbau einer erfindungsgemässen Anordnung beschrieben.

Dabei zeigen:
- Fig. 1: eine erfindungsgemässe Anordnung, bei welcher der Ethenadsorber in der Folie bzw. im Papier integriert angeordnet ist;
- Fig. 2: schematisch einen Schichtaufbau einer erfindungsgemässen Anordnung mit dem Ethenadsorber als Beschichtung, angeordnet auf einer Folie bzw. einem Papier.

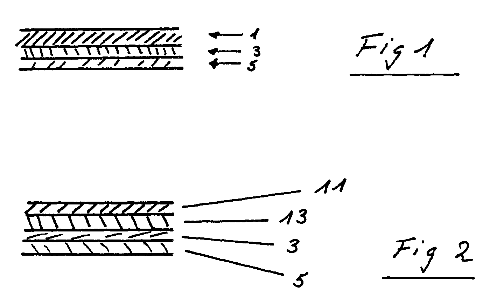

Figur 1 zeigt im Schnitt schematisch den Aufbau einer erfindungsgemässen Anordnung, enthaltend eine Folie bzw. ein Papier 1, enthaltend das Ethen-aufnahmefähige Molekularsieb. Auf einer Seite der Folie bzw. des Papiers 1 ist ein Kleber 3 angeordnet. An sich können irgendwelche herkömmliche Kleber verwendet werden, welche geeignet sind für das Kleben einer Folie bzw. von Papier auf einem flächigen Untergrund, wie Karton, Holz, einem Mauerwerk, Gips, etc. Als Beispiel genannt sei hier ein Kleber auf Melaminharzbasis. Der Kleber wird schliesslich überdeckt durch eine silikonisierte Abdeckfolie 5. Das Anbringen des Klebers ist immer optional.

Für die Herstellung der Folie bzw. des Papiers 1 wird ein hydrophober Zeolith in die Polymer- bzw. Papiermatrix eingebaut. Dabei kann der Zeolith in eine Polymerschmelze, wie beispielsweise geschmolzenes Polyethylen, für Folienherstellung geeigneten Polyester, Polyamid, Polypropylen, etc. im Sinne eines Additives bzw. Füllstoffes oder Verstärkungsmittels in der Grössenordnung von ca. 5 - 30 Gew.% eingearbeitet werden, und anschliessend die Schmelze gemäss in der Kunststoffindustrie üblichen Verfahren zu Folien verarbeitet werden. Im Falle der Verwendung eines Papierbreies wird analog der Zeolith erneut in der Grössenordnung ca. 5 - 30 Gew.% in den Papierbrei eingearbeitet, und anschliessend dieser gemäss üblich verwendeten Papierherstellverfahren weiter verarbeitet.

Die Herstellung der erfindungsgemässen Anordnung kann aber auch dadurch erfolgen, indem eine Polymerfolie bzw. ein Papier mit dem Molekularsieb beschichtet wird. Eine so hergestellte Anordnung ist schematisch im Schnitt in Figur 2 dargestellt. Auf einer Polymerfolie bzw. einem Papier 13 aufgebracht ist eine Beschichtung 11, beinhaltend das ethenadsorbierende Molekularsieb. Die Beschichtung des Papiers bzw. der Folie kann durch Auftragen einer wässrigen Dispersion, enthaltend den Zeolith, erfolgen. Die Beschichtung kann durch Aufspritzen, Aufpressen, Aufwalzen, etc. erfolgen. Nach Aufbringen der Beschichtung wird anschliessend das Wasser entfernt. Die Beschichtung kann aber analog gleicher Methoden erfolgen wie das Silikonisieren von Folien, was seit langem bekannt ist.

Nach erfolgter Beschichtung wird erneut die Folie optional gegebenenfalls auf der, der Beschichtung gegenüberliegenden Seite mit einem Kleber 3 versehen, bei welchem es sich wiederum um einen allgemein üblich für das Kleben von Folien oder Papier verwendeten Kleber handeln kann. Schliesslich wird der Kleber erneut vor Gebrauch der Folie bzw. des Papiers mit einer silikonisierten Abdeckfolie 5 versehen.

Für den Gebrauch der erfindungsgemässen Anordnung wird nun zunächst die silikonisierte Abdeckfolie 5 entfernt und die Folie bzw. das Papier mittels des Klebers, beispielsweise im Sinne einer Tapete, an einer Wandung angebracht oder aber kann ein Holzgestell ausgekleidet werden, auf oder in welchem das zu lagernde Obst angeordnet wird. Auch ist es möglich Transportboxen innenseitig mit der erfindungsgemässen Folie bzw. dem Papier auszukleiden.

Für das Herstellen der Folie bzw. Beschichten der Folie oder des Papiers können beispielsweise Zeolith-Typen mit einem SiO₂/Al₂O₃-Verhältnis verwendet werden, von > 10 - ca. 1000. Beispiele hierzu sind der Typ ZSM-5, z.B. erhältlich als Zeocat PZ-2/400 der Firma Zeochem AG, Uetikon, Schweiz, welcher ein SiO₂/Al₂O₃-Verhältnis von 400 aufweist. Dieser Zeolith gehört zum Strukturtyp MFI und weist ein dreidimensionales Porensystem mit Porenöffnungen von ca. 050 x 0,55 und 0,55 x 0,55 nm auf.

Ein weiteres Beispiel ist der Zeolith Beta mit einem SiO₂/Al₂O₃-Verhältnis von 20, z.B. erhältlich als Zeocat PB der Firma Zeochem AG, Uetikon, Schweiz. Dieser Zeolith gehört zum Strukturtyp BEA und weist ein dreidimensionales Porensystem mit Porenöffnungen von ca. 0,65 x 0,75 und 0,55 x 0,55 nm auf.

Wiederum ein weiteres Beispiel ist der Zeolith des Typs Mordenit mit einem SiO₂/Al₂O₃-Verhältnis von 25, z.B. erhältlich als Zeocat FM-8/25H der Firma Zeochem AG, Uetikon, Schweiz. Dieser Zeolith gehört zum Strukturtyp MOR und weist im Wesentlichen ein eindimensionales Porensystem mit Porenöffnungen von ca. 0,65 x 0,70 nm auf.

Schliesslich, als weiteres Beispiel, erwähnt sei der Zeolith des Typs USY mit einem SiO₂/Al₂O₃-Verhältnis von 60, z.B. erhältlich als AkZeo-765 der Firma Akzo, Holland. Dieser Zeolith gehört zum Strukturtyp FAU und weist ein dreidimensionales Porensystem mit Porenöffnungen von ca. 0,75 x 0,75 nm auf.

Es versteht sich von selbst, dass es sich bei den angegebenen SiO₂/Al₂O₃-Verhältnissen nur um Beispiele handelt, und dass bei allen genannten Zeolithen dieses Verhältnis in weiten Grenzen variieren kann. Die Aufzählung der oben erwähnten Zeolithe hat keinen abschliessenden Charakter. Es können grundsätzlich Zeolithe mit einem SiO₂/Al₂O₃-Verhältnis, das grösser als 10 ist, eingesetzt werden. Zudem können alle oben erwähnten Zeolithe mit Silberionen imprägniert werden.

Der Ionenaustausch für die Imprägnierung erfolgt in einer dem Fachmann bekannten Art, wobei üblicherweise in einer wässrigen Suspension gearbeitet wird. Die eingebrachten Silberionen verdrängen die vorhandenen beweglichen Kationen des Zeolithgitters. Der Ionen-Austauschgrad kann sich im Bereich von 5 bis 100 % bewegen. Ein derart behandelter Zeolith hat immer noch die Eigenschaft, Ethen zu absorbieren. Zusätzlich weist ein solcher Zeolith bakterizide Eigenschaften auf. Damit wird nicht nur der Alterungsprozess des Obstes verlangsamt, sondern auch Fäulnisprozesse werden gehemmt, welche durch Mikroorganismen induziert werden.

Schliesslich sei ergänzend erwähnt, dass selbstverständliche auch andere Materialien verwendet werden können, welche befähigt sind, Ethen zu adsorbieren. Grundsätzlich wesentlich für die vorliegende Erfindung ist die Verwendung einer Anordnung für das Hemmen eines Reifeprozesses von insbesondere Obst, welche befähigt ist, Ethen zu adsorbieren bzw. aus der das Obst umgebenden Atmosphäre zu entziehen.

## Patentansprüche

1. Verfahren zur Hemmung des Reifeprozesses, insbesondere von Obst, **dadurch gekennzeichnet, dass** ein Adsorbens, insbesondere ein Zeolith, in der Umgebung des Obstes angeordnet wird, welches in der Lage ist Ethen zu adsorbieren.

2. Verfahren nach Anspruch 1, **dadurch gekennzeichnet, dass** eine folienartige bzw. eine papierartige Anordnung, enthaltend ein Adsorbens, in der Nähe des Obstes angeordnet wird, und/oder mit dem Obst in Kontakt gebracht wird, um vom Obst abgegebenes Ethen ständig aus der Umgebungsatmosphäre zu adsorbieren.

3. Verfahren nach einem der Ansprüche 1 oder 2, **dadurch gekennzeichnet, dass** das verwendete Absorbens zusätzlich ein Additiv mit bakteriziden Eigenschaften enthält, um zusätzlich zur Hemmung des Reifeprozesses auch Fäulnisprozesse zu hemmen.

4. Anordnung zur Hemmung des Reifeprozesses, insbesondere von Obst mindestens bestehend aus einer Folie bzw. einem Papier, mindestens aufweisend einen Zeolith, welcher befähigt ist Ethen aus der Umgebungsatmosphäre zu adsorbieren.

5. Anordnung nach Anspruch 4, **dadurch gekennzeichnet, dass** es sich bei Zeolith um ein poröses Aluminiumsilikat mit einem Netzwerk von genau definierten Poren handelt.

6. Anordnung nach einer der Ansprüche 4 oder 5, **dadurch gekennzeichnet, dass** das Zeolitz zusätzlich mit Silberionen imprägniert ist.

7. Anordnung nach Anspruch 5 oder 6, **dadurch gekennzeichnet, dass** das Aluminiumsilikat ein SiO₂/Al₂O₃-Verhältnis von > 10 aufweist.

8. Anordnung nach einem der Ansprüche 5 bis 7, **dadurch gekennzeichnet, dass** das Verhältnis SiO₂/Al₂O₃ im Zeolith von ca. 10 - 1000, vorzugsweise zwischen 20 und 400 beträgt, mit einem dreidimensionalen Porensystem mit Porenöffnungen von ca. 0,3 x 0,3 - 0,8 x 0,8 nm.

9. Anordnung nach einem der Ansprüche 4 bis 8, **dadurch gekennzeichnet, dass** der hydrophobe Zeolith in einer Polymerfolie eingearbeitet angeordnet ist, in der Grössenordnung von ca. 5 bis 50 Gew.%, vorzugsweise 10 bis 30 Gew.%.

10. Anordnung nach Anspruch 9, **dadurch gekennzeichnet, dass** es sich beim Polymeren um Polyethylen, um einen Polyester, Polypropylen, Polyamid, PVC oder dgl. handelt.

11. Anordnung nach einem der Ansprüche 4 bis 8, **dadurch gekennzeichnet, dass** der hydrophobe Zeolith integral in einem Papier angeordnet ist, in der Grössenordnung von ca. 5 bis 50 Gew.%, vorzugsweise 10 bis 30 Gew.%.

12. Anordnung nach einem der Ansprüche 4 bis 8, **dadurch gekennzeichnet, dass** der hydrophobe Zeolith als Beschichtung auf einer Polymerfolie bzw. einem Papier angeordnet ist, wobei es sich beim Polymer, beispielsweise um Polyethylen, Polyester, Polyamid, Polypropylen, PVC oder dgl. handelt.

13. Verfahren zur Herstellung einer Anordnung nach einem der Ansprüche 4 bis 12, **dadurch gekennzeichnet, dass** der hydrophobe Zeolith zusammen mit einer Polymerschmelze oder einem Papierbrei in der Grössenordnung von 5 bis 50 Gew.%, vorzugsweise 10 bis 30 Gew.% im Sinne eines Füllstoffes oder eines Additives verarbeitet wird gemäss üblich in der Kunststoffindustrie verwendeten Folienherstellungsprozessen bzw. in der Papierindustrie üblicherweise verwendete Methode zur Papierherstellung.

14. Verfahren zur Herstellung einer Anordnung nach einem der Ansprüche 4 bis 8 oder 12, **dadurch gekennzeichnet, dass** eine Polymerfolie oder ein Papier mittels einer wässrigen Dispersion, enthaltend den hydrophoben Zeolithen, beschichtet wird, und anschliessend das Wasser aus der Beschichtung entfernt wird.

15. Verfahren nach Anspruch 14, **dadurch gekennzeichnet, dass** als Bindemittel in der wässrigen Dispersion Silane oder Siloxane verwendet werden.

16. Verfahren nach einem der Ansprüche 13 bis 15, **dadurch gekennzeichnet, dass** vor dem Verarbeiten der Zeolith mit Silberionen imprägniert wird durch Ionenaustausch in einer wässrigen Suspension, wobei der Ionenaustauschgrad im Bereich von ca. 5 bis 100% liegt.

17. Anordnung nach einem der Ansprüche 1 bis 12, **dadurch gekennzeichnet, dass** die Folie oder das Papier auf einer Seite mit einem Kleber beschichtet ist, welcher Kleber vorzugsweise von einer wieder entfernbaren, silikonisierten Abdeckfolie überdeckt ist.

18. Verwendung der Anordnung nach einem der Ansprüche 1 bis 12 oder 17 zur Hemmung des Reifeprozesses, insbesondere von Obst durch Auslegung der Folie oder des Papiers als Tapete, als Auslegematerial in Transportcontainern, in oder an Behältnissen, als Auslegematerial auf Lagergestellen, etc. für die Adsorption von Ethen in der das Obst umgebenden Atmosphäre.
